# EUROPEAN PATENT APPLICATION

(11) **EP 2 743 816 A2**
(43) Date of publication of application: **18.06.2014**
(21) Application number: 13197106.1
(22) Date of filing: 13.12.2013
(51) Int. Cl.: G06F 3/0485, G06F 3/0488

(54) **Method and apparatus for scrolling screen of display device**

(30) Priority: 17.12.2012 KR 20120147468
(71) Applicant: Samsung Electronics Co., Ltd, Gyeonggi-do 443-742 (KR)
(72) Inventor: Lee, Jae-Myoung, Gyeonggi-do 443-742 (KR); Won, Sung-Joon, Gyeonggi-do 443-742 (KR)
(74) Representative: Gover, Richard Paul

(57) **Abstract**

A method of scrolling a screen of a display device is provided. The method includes when a flick input is generated in a display state of a list view, determining whether a predetermined additional touch input, which is temporally and spatially associated with the flick input or is functionally associated with a performance of an operation according to the flick input, is generated according to a predetermined reference, and when the additional touch input is generated according to the predetermined reference, displaying at a topmost or bottommost part of list items of the list view according to a state of the flick input.

## Description

### BACKGROUND OF THE INVENTION

### 1. Field of the Invention:

The present invention relates to a technology for controlling a display screen of a display device (for example, a portable phone, a TeleVision (TV), or a tablet Personal Computer (PC)). More particularly, the present invention relates to a method and an apparatus for scrolling a display screen in an input device (a TV remote controller, a touch-based smart phone, a table PC, and the like) in which a touch input is allowed.

### 2. Description of the Related Art:

An electronic device directly controlled by a user includes at least one display device, and the user may control the electronic device through an input device while identifying various operation states or application operations of the corresponding electronic device through the display device. More particularly, a portable terminal, such as a smart phone, a cellular phone, a Portable Multimedia Player (PMP), a Motion Picture Experts Group (MPEG)-2 Audio Layer III (MP3) player, and a handheld personal navigation device, typically employs a scheme of providing a user interface by including an input device (for example, a touch screen) through which a screen touch input of a user is allowed, rather than a four directional hard button or the like, for receiving an operation of an up/down/left/right movement, due to a limited size.

A portable terminal will be described as an example. When the portable terminal performs various functions, such as web browsing, displaying an electronic book, a text chatting service, a search of a mail list, a search of items of receiving/sending items, and a search of an address book, the portable terminal provides a list view sequentially displaying items related to a corresponding operation in a form of plural line texts, a bar, a box, or an icon, or a combination thereof. The list view displays a selected part among all of the items of the list due to a limited size of a display screen of the portable terminal, and the portable terminal generally provides an interface scheme through which an image moves (that is, a displayed item moves) through a screen scrolling operation.

In this case, in the scheme of providing the user interface through the touch screen, in order to manipulate a movement of a list item, a user may move to a desired point through a drag operation (an operation of moving to a certain point, in a state where a finger or an electronic pen (such as a stylus pen and the like) touches one point of the touch screen, stopping at the certain point, and then lifting the finger or the electronic pen off the point), or through a flick operation (e.g., an operation of taking a finger or a stylus pen off the touch interface while rapidly moving in any one direction, in a state where the finger or the stylus pen first touches one point of the touch screen). In a case where a drag input is present, a screen scrolling operation is performed in a list view state according to a direction and a movement state corresponding to the drag input, and in a case where a flick input is present, an operation of rapidly performing screen scrolling at a speed and in a direction corresponding to the flick input, and then stopping the screen scrolling by gradually decreasing a speed of the screen scrolling, is performed.

However, in this case, when there are many list items, it is only possible to reach a desired list item through several repetitions of drag or flick operations, thereby causing inconvenience to the user. More particularly, during the use, there are many cases of identifying the list view while moving to an uppermost end or the bottommost part of the list items, or alternatively identifying an uppermost part or the bottommost part of the list items. In this case, the scrolling scheme of the related art requires a very inconvenient operation.

The above information is presented as background information only to assist with an understanding of the present disclosure. No determination has been made, and no assertion is made, as to whether any of the above might be applicable as prior art with regard to the present invention.

### SUMMARY OF THE INVENTION

Aspects of the present invention are to address at least the above-mentioned problems and/or disadvantages and to provide at least the advantages described below. Accordingly, an aspect of the present invention is to provide a method and apparatus for scrolling a screen of a display device, which reduces operations in controlling the list view on the display, provides convenience in use, and allows the list view to move to the topmost part or the bottommost part with a minimum operation.

In accordance with an aspect of the present invention, a method of scrolling a screen of a display device is provided. The method includes when a flick input is generated in a display state of a list view, determining whether a predetermined additional touch input, which is temporally and spatially associated with the flick input or is functionally associated with a performance of an operation according to the flick input, is generated according to a predetermined reference, and when the additional touch input is generated according to the predetermined reference, displaying a topmost or bottommost part of list items of the list view according to a state of the flick input.

The temporally associated additional touch input may include the predetermined touch input at least one time within a predetermined reference time when the flick input is generated.

The spatially associated additional touch input may include the flick input generated in a multi-touch scheme when the flick input is generated.

The generation of the flick input in the multi-touch scheme when the flick input is generated may include simultaneous generation of a plurality of flick inputs at a plurality of points.

The generation of the flick input in the multi-touch scheme when the flick input is generated may include generation of at least one flick input and at least one touch input fixed at a position at a plurality of points.

The additional touch input, which is functionally associated with the performance of the operation according to the flick input, may include a touch input additionally input before a completion of a scrolling operation according to the flick input.

When the additional touch input is generated according to the predetermined reference, an image, to which a higher-speed moving effect is added, compared to an image moving speed during a general screen scrolling operation, may be displayed according to the state of the flick input.

Other aspects, advantages, and salient features of the invention will become apparent to those skilled in the art from the following detailed description, which, taken in conjunction with the annexed drawings, discloses exemplary embodiments of the invention.

### BRIEF DESCRIPTION OF THE DRAWINGS

The above and other aspects, features, and advantages of certain exemplary embodiments of the present invention will be more apparent from the following description taken in conjunction with the accompanying drawings, in which:
FIG. 1 is a schematic block diagram illustrating an apparatus for performing screen scrolling of a display device according to an exemplary embodiment of the present invention;
FIG. 2 is a flowchart illustrating a screen scrolling operation of a display device according to an exemplary embodiment of the present invention;
FIG. 3 is a diagram illustrating entire list items of a target list view on which a screen scrolling operation is performed when the operation of FIG. 2 is performed according to an exemplary embodiment of the present invention;
FIGS. 4A to 4C are diagrams illustrating display screens when the operation of FIG. 2 is performed according to an exemplary embodiment of the present invention;
FIG. 5 is a diagram of a display screen when a modification of the operation of FIG. 2 is performed according to an exemplary embodiment of the present invention;
FIG. 6 is a flowchart illustrating a screen scrolling operation of a display device according to an exemplary embodiment of the present invention;
FIGS. 7A to 7C are diagrams illustrating display screens when the operation of FIG. 6 is performed according to an exemplary embodiment of the present invention;
FIGS. 8A to 8C are diagrams of display screens when a modification of the operation of FIG. 6 is performed according to an exemplary embodiment of the present invention;
FIG. 9 is a flowchart illustrating a screen scrolling operation of a display device according to an exemplary embodiment of the present invention; and
FIGS. 10A to 10E are display screens when the operation of FIG. 9 is performed according to an exemplary embodiment of the present invention.
Throughout the drawings, it should be noted that like reference numbers are used to depict the same or similar elements, features, and structures.

### DETAILED DESCRIPTION OF EXEMPLARY EMBODIMENTS

The following description with reference to the accompanying drawings is provided to assist in a comprehensive understanding of exemplary embodiments of the invention as defined by the claims and their equivalents. It includes various specific details to assist in that understanding but these are to be regarded as merely exemplary. Accordingly, those of ordinary skill in the art will recognize that various changes and modifications of the embodiments described herein can be made without departing from the scope and spirit of the invention. In addition, description of well-known functions and constructions may be omitted for clarity and conciseness.

The terms and words used in the following description and claims are not limited to the bibliographical meanings, but, are merely used by the inventor to enable a clear and consistent understanding of the invention. Accordingly, it should be apparent to those skilled in the art that the following description of exemplary embodiments of the present invention is provided for illustration purpose only and not for the purpose of limiting the invention as defined by the appended claims and their equivalents.

It is to be understood that the singular forms "a," "an," and "the" include plural referents unless the context clearly dictates otherwise. Thus, for example, reference to "a component surface" includes reference to one or more of such surfaces.

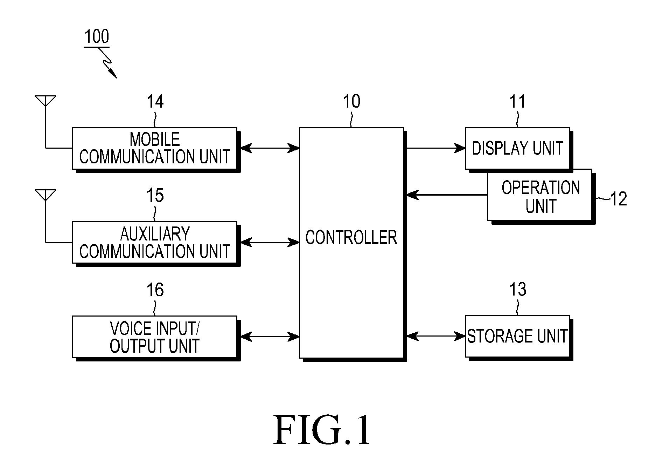

FIG. 1 is a schematic block diagram illustrating an apparatus for performing screen scrolling of a display device according to an exemplary embodiment of the present invention. FIG. 1 illustrates a case where the display device is a portable terminal.

Referring to FIG. 1, a portable terminal 100 according to an exemplary embodiment of present invention includes a controller 10, a display unit 11, an operation unit 12, a storage unit 13, a mobile communication unit 14, an auxiliary communication unit 15, and a voice input/output unit 16.

The display unit 11 is formed, for example, of a general Liquid Crystal Display (LCD) screen or an Organic Light Emitting Diode (OLED), for example, a Passive Matrix Organic Light Emitting Diode (PMOLED) or an Active Matrix Organic Light Emitting Diode (AMOLED) as the OLED screen, so that the display unit 11 may display execution images of various application programs, various operation states, and menu states of the corresponding portable terminal, and may be integrally implemented with a touch screen structure.

The operation unit 12 is formed of a touch screen and a touch screen controller and is associated with the display unit 11 to receive various touch screen operations, such as a touch, a drag, a flick, and multi-touch, through a hand touch of a user or a touch through an electronic pen or stylus. Further, the operation unit 12 may include a keypad or hard buttons, for a plurality of operations, mechanically included in an exterior housing, and the like, of a corresponding device, to receive an operation of the user.

The mobile communication unit 14 performs a wireless signal processing operation for a mobile communication function, and may include an antenna, a Radio Frequency (RF) unit, and a modulator-demodulator (modem). The RF unit includes an RF transmitter for up-converting and amplifying a frequency of a transmitted signal, and an RF receiver for low-noise amplifying a received signal and down-converting a frequency. The modem includes a transmitter for encoding and modulating a signal to be transmitted, and a receiver for demodulating and decoding a signal received from the RF unit.

The auxiliary communication unit 15 includes a wireless Local Area Network (LAN) module, a near field communication module, or the like, and may be connected with wireless Internet at a place in which a wireless Access Point (AP) is installed or perform wireless near field communication with peripheral devices.

The voice input/output unit 16 includes a speaker, a microphone, and a voice coder-decoder (codec) for processing an audio signal input/output through the speaker and the microphone, and receives a voice of a user or outputs an audible sound to the user when an audio communication according to the mobile communication function is performed, and further outputs processing sounds corresponding to various operations, and sounds corresponding to various digital audio contents and video contents.

The storage unit 13 may include program memories and data memories for storing an Operating System (OS), various contents, various application programs, relevant contents, data received or generated during use, and data related to processing the operation. The OS for controlling a general operation of the portable terminal is stored in the program memory. An operation program for screen scrolling according to an exemplary embodiment of the present invention is also stored in the storage unit 13.

The controller 10 generally controls the respective functional units to control a general operation of the portable terminal 100, and may switch and control the operation of the portable terminal 100 according to the input of the user input through the operation unit 12.

Further, when a scrolling target list view image is displayed, the controller 10 according to an exemplary embodiment of the present invention determines the presence of a predetermined additional touch input, which is temporally and spatially associated with a corresponding flick input or functionally associated with performance of the operation according to the corresponding flick input in a case where the flick input is present, and controls an operation of displaying the uppermost or bottommost part among the list items of the list view according to a flick input state. A detailed operation of the controller 10 according to an exemplary embodiment of the present invention will be described below.

The portable terminal according to an exemplary embodiment of the present invention may be implemented by including the aforementioned constituent elements, and additionally, the portable terminal may include functional units applied to a general portable terminal, such as a power source unit, a battery for charging, a Global Positioning System (GPS) unit, a vibration motor, and a motion sensor for detecting a motion state of a corresponding device as a matter of course.

Further, the structure of the portable terminal has been described as the example of the portable terminal 100 according to an exemplary embodiment of the present invention in FIG. 1. However, in addition, the apparatus according to an exemplary embodiment of the present invention may be, for example, a TeleVision (TV) remote controller, and in this case, the apparatus may include a near field communication module, such as an infrared communication module or Bluetooth, for communicating with a TV main body device. In this case, the apparatus may not include the mobile communication unit 14, the auxiliary communication unit 15, or the voice input/output unit 16 as a matter of course.

A scheme of screen scrolling a list view according to an exemplary embodiment of the present invention, which can be performed in the device including the aforementioned configuration will be described in detail. In an exemplary embodiment of the present invention, in a case where a flick input is present, it is determined whether a predetermined additional touch input, which is temporally and spatially associated with the corresponding flick input, or is functionally associated with performance of an operation according to the corresponding flick input, is present. The temporally associated additional touch input may be, for example, when the flick input is made, re-generation of the flick input within a predetermined reference time. The spatially associated additional touch input may be, for example, generation of the flick input in a multi-touch scheme when the flick input is made. The additional touch input functionally associated with the performance of the operation according to the corresponding flick input may be an additionally input flick input, before a scrolling operation according to the initial flick input is completed. As described above, an exemplary embodiment of the present invention suggests a scheme of displaying an image by moving (jumping) to the topmost or bottommost part of the list view according to the flick input state in a case where a temporally, spatially, or functionally associated additional touch input is present when the flick input is made.

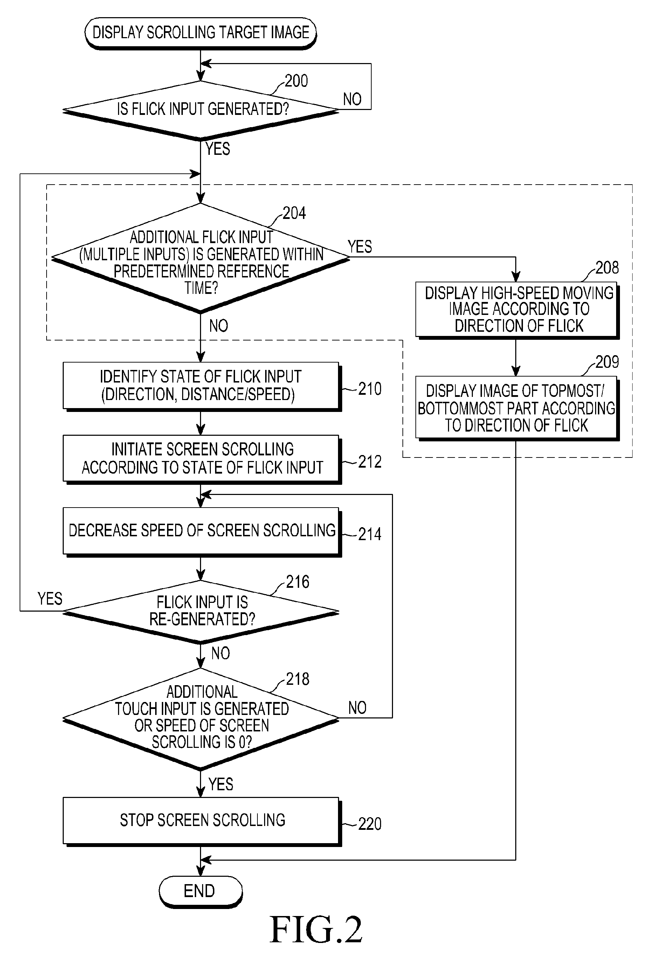

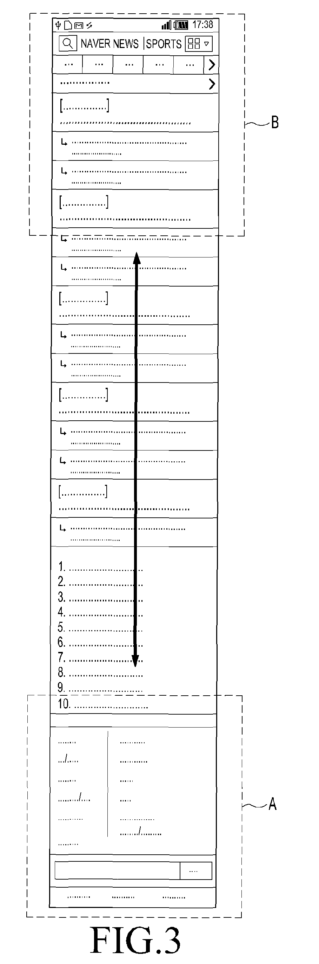

FIG. 2 is a flowchart illustrating a screen scrolling operation of a display device according to a first exemplary embodiment of the present invention, and FIG. 3 is a diagram illustrating entire list items of a target list view on which a screen scrolling operation is performed when the operation of FIG. 2 is performed according to an exemplary embodiment of the present invention. The screen scrolling operation may be performed under the control of the controller of the portable terminal illustrated in FIG. 1. The operation illustrated in FIG. 2 represents, for example, an operation at the time of the temporally associated additional touch input when the flick input is made. The screen scrolling operation performed in a state of displaying a scrolling target list view image according to an exemplary embodiment of the present invention will be described with reference to FIGS. 2 and 3.

First, it is identified whether a flick input is generated in step 200, and when it is identified that the flick input is generated, the process proceeds to step 204.

In step 200, the entire list of items of the target list view on which the screen scrolling operation is performed may have, for example, a structure as illustrated in FIG. 3. FIG. 3 represents a news search image during web browsing according to an exemplary embodiment of the present invention. A part of the entire list of items illustrated in FIG. 3 is displayed in one screen according to a size of the screen, in such a manner that, for example, an image for the items at the bottommost part may be initially displayed as in part A of FIG. 3. Part B in FIG. 3 is an example of an image for the items of the topmost part among the entire list items.

In step 204, it is determined whether one or more additional flick inputs (in the same direction) are generated within a predetermined reference time (for example, 400 ms). When the additional flick input is not generated within the reference time, the process proceeds to step 210, and when the additional flick input is generated within the reference time, the process proceeds to step 208.

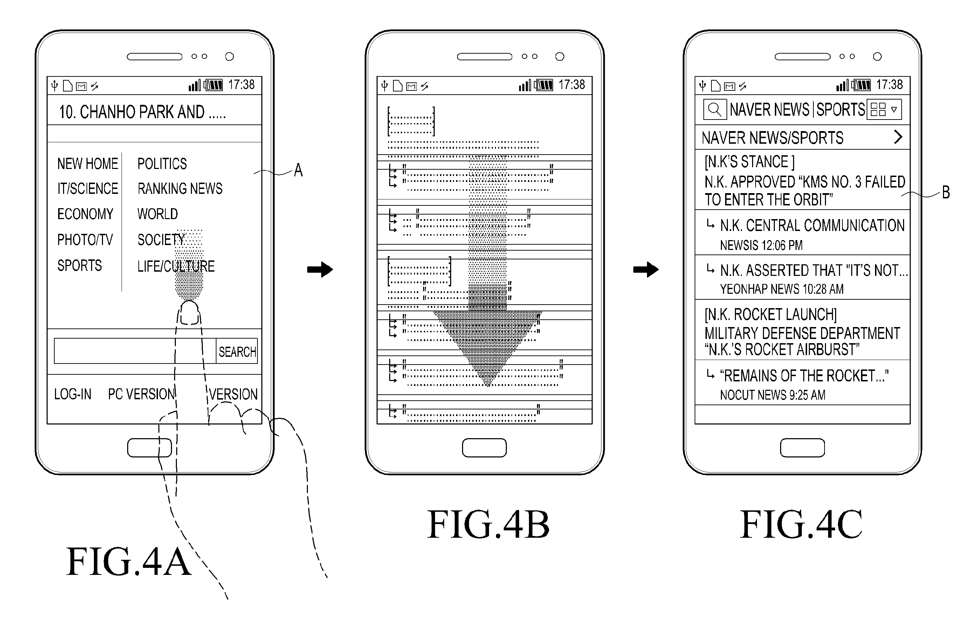

FIGS. 4A to 4C are diagrams illustrating display screens when the operation of FIG. 2 is performed according to an exemplary embodiment of the present invention.

FIG. 4A illustrates a state where the flick is continuously generated two times in a downward direction on the screen within a short time (reference time) according to an exemplary embodiment of the present invention.

As described above, when the additional flick input is generated within the reference time, in step 208, a high-speed moving image is displayed for a predetermined time in a direction of the flick input as illustrated in FIG. 4B. The high-speed moving image is an image to which an effect of high-speed movement is further added compared to the generally displayed moving image at the time of the screen scrolling operation according to the flick input, and observability of each list item in the corresponding high-speed image is not significant. The high-speed moving image may thus provide a visual indication to the user that the scrolling is executing according to an exemplary embodiment of the present invention.

After the display operation of the high-speed moving image in step 208, in step 209, as illustrated in FIG. 4C, the items at the topmost part (part B) or the bottommost part (part A) among the entire list items are displayed in the flick input direction. In this case, for example, when the current flick input direction is a downward direction, the image moves to the topmost part (part B). It is a matter of course that when the flick is continuously generated again in an upward direction within a short time in this state, the list items at the bottommost part are displayed by performing steps 200 to 209.

As described above, when the flick is continuously generated within the predetermined reference time when the operation of steps 200 to 209 are performed, the image moves to the topmost part or the bottommost part of the list items in the list view after displaying the high-speed image according to the flick input direction. In this case, in a modified example of an exemplary embodiment of the present invention, the operation of displaying the high-speed moving image may be omitted.

In the meantime, after the identification of the flick input in step 200, when the additional flick input is not generated within the predetermined reference time in step 204, a general flick input processing operation is performed in step 210 and subsequent steps thereof.

That is, in step 210, the current state (e.g., direction, distance/speed, and the like) of the flick input generated in step 200 is identified, and then the screen scrolling is initiated according to the state of the flick input in step 212. The screen scrolling operation is performed in an upward or downward direction according to the flick input direction, and in this case, a speed of the scrolling operation may be differently set according to the distance/speed, and the like, of the input flick.

Then, in step 214, the speed of the current screen scrolling is decreased by a predetermined amount, and then in step 216, it is determined whether the flick input is re-generated. When the flick input is re-generated, the process returns to step 204 to repeat the operation, and when the flick input is not re-generated, the process proceeds to step 218.

In step 218, it is determined whether additional touch input is generated or whether the speed of the screen scrolling is 0. When it is determined that the additional touch input is generated or that the speed of the screen scrolling is 0, the process proceeds to step 220 to stop the screen scrolling operation. However, when it is determined that the additional touch input is not generated or that the speed of the screen scrolling is not 0, the process returns to step 214 to repeat the steps.

Referring to FIG. 2, the screen scrolling operation according to an exemplary embodiment of the present invention may be performed, and the remaining steps except for steps 204, 208, and 209 as indicated within a dotted line region in the operations illustrated in FIG. 2 may be similar to a screen scrolling operation performed when a flick input is generated in a state of a list view display in the related art.

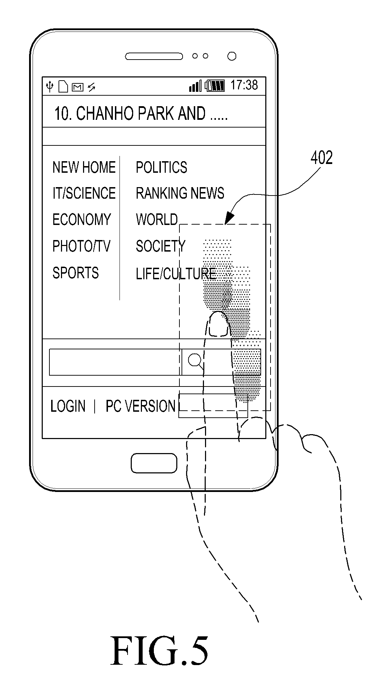

FIG. 5 is diagram of a display screen when a modification of the operation of FIG. 2 is performed according to an exemplary embodiment of the present invention. Referring to FIG. 5, an operation of determining, for example, a case where a flick is continuously generated three times within a predetermined reference region 402 within an image may be performed by modifying the operation of determining whether the additional flick input is generated within the predetermined reference time in step 204 illustrated in FIG. 2.

As described above, when the flick is continuously generated three times within the predetermined reference time and within the reference region 402, the high-speed moving image is displayed according to a flick input direction as in step 208 of FIG. 2, and then an image for the items at the topmost part or the bottommost part among the entire list items is displayed according to the flick input direction as in step 209 of FIG. 2. For example, if the flick is generated three times within the predetermined reference time, but not all of the three flicks are within the reference region 402, then the method of this exemplary embodiment would proceed to step 210 as in FIG. 2.

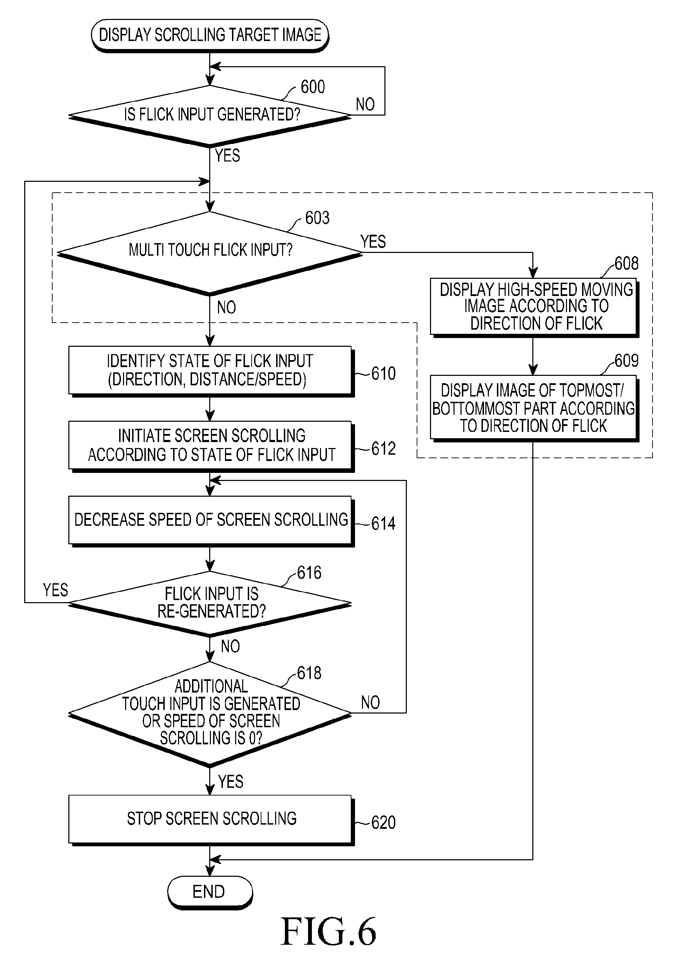

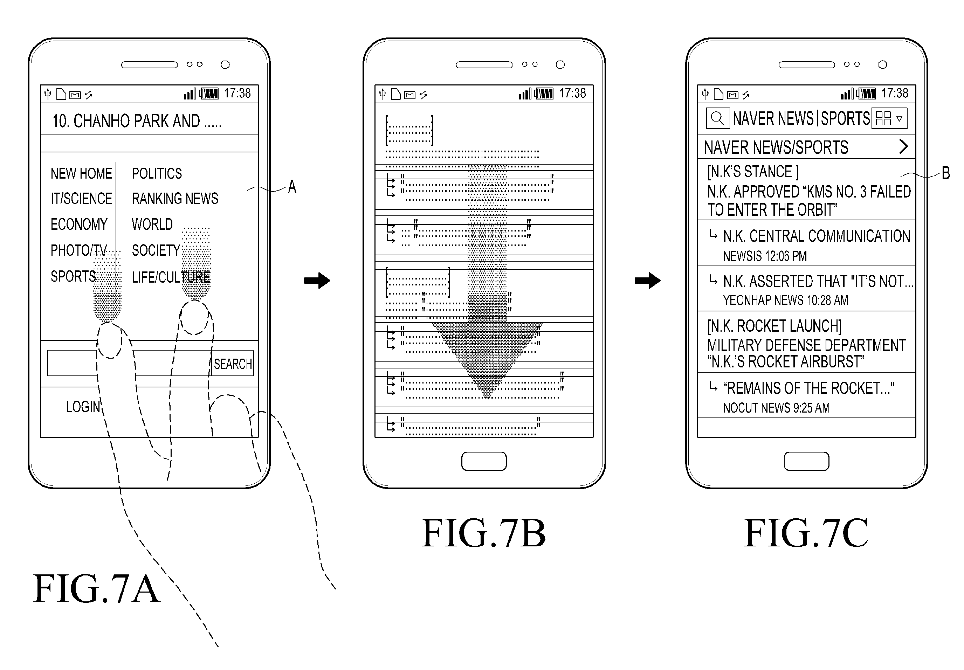

FIG. 6 is a flowchart illustrating a screen scrolling operation of a display device according to a second exemplary embodiment of the present invention. FIGS. 7A to 7C are diagrams illustrating display screens when the operation of FIG. 6 is performed according to an exemplary embodiment of the present invention.

The first exemplary embodiment illustrated in FIG. 2 represents the operation when the temporally associated additional touch input is generated when the flick is input, but FIG. 6, in contrast, represents an operation when a spatially associated additional touch input is generated when a flick is input.

Referring to FIG. 6, first, it is identified whether a flick input is generated in step 600, and when it is identified that the flick input is generated, the process proceeds to step 603.

In step 603, it is determined whether the corresponding flick input is a multi-touch flick input. When the corresponding flick input is not the multi-touch flick input, the process proceeds to step 610, and when the corresponding flick input is the multi-touch flick input, the process proceeds to step 608. FIG. 7A illustrates the multi-touch flick input according to an exemplary embodiment of the present invention, and as illustrated, the multi-touch flick input may mean that the user simultaneously makes multiple flick inputs at a plurality of points by using two or more fingers.

As described above, when the multi-touch flick input is generated, a high-speed moving image is displayed according to a direction of the flick input in step 608 as illustrated in FIG. 7B. Then, in step 609, as illustrated in FIG. 7C, an image for items of a topmost part (part B) or a bottommost part (part A) among the entire list items according to the direction of the multi-touch flick input is displayed.

As described above, according to the second exemplary embodiment of the present invention, when the multi-touch flick input is generated when the operations of steps 600 to 609 are performed, the high-speed moving image is displayed according to the direction of the flick input and then the image is moved to the topmost end or the bottommost end of the list items in the list view. In this case, in the modified example of an exemplary embodiment of the present invention, the operation of displaying the high-speed moving image may be omitted.

After the identification of the flick input in step 600, when an additional flick input is not generated within a predetermined reference time in step 603, a general operation of processing the flick input is performed in step 610 and subsequent steps thereof, and in this case, the operations of steps 610 to 620 are mostly the same as the operations 210 to 220 illustrated in FIG. 2, and a further description thereof is omitted. However, in step 616 of identifying a flick re-input during the screen scrolling operation, when the flick re-input is identified, the process proceeds to step 603 to repeatedly perform the aforementioned process, rather than step 204.

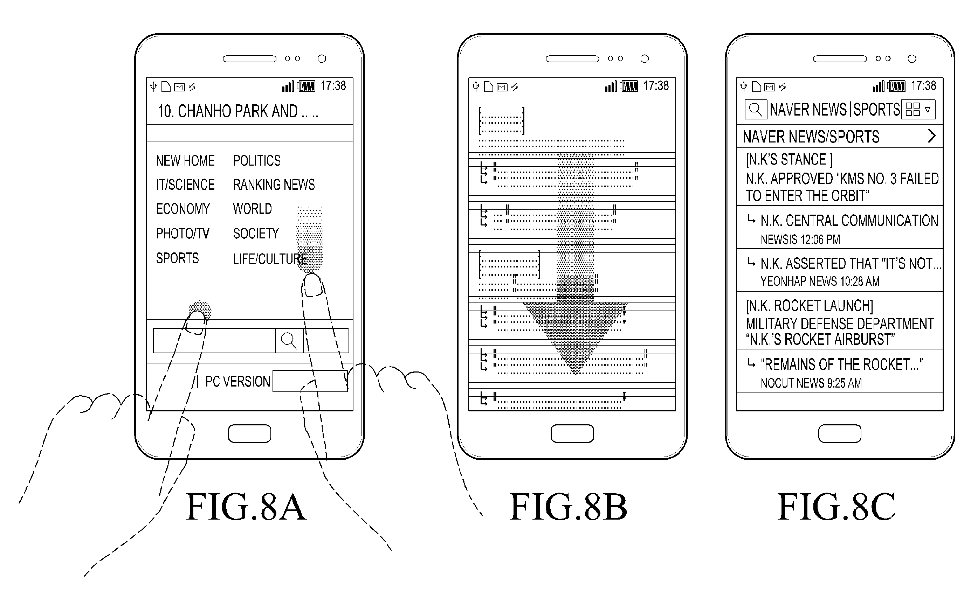

FIGS. 8A to 8C are diagrams of display screens when a modification of the operation of FIG. 6 is performed according to an exemplary embodiment of the present invention. Referring to FIGS. 8A to 8C, another example of determining the multi-touch flick input in step 603 illustrated in FIG. 6 is illustrated. In the example illustrated in FIG. 6, it is described that it is determined that the multiple flicks are simultaneously generated by the plurality of fingers, but in the modified example of FIGS. 8A to 8C, in a state where at least one finger touches while being fixed at a position, the user makes a flick input by using the remaining one or more fingers.

Even in a case where the aforementioned type of multi-touch flick input is generated, after the high-speed moving image is displayed according to the direction of the flick input similarly to step 609 of FIG. 6, the image for the items of the topmost part or the bottommost part among the entire list items is displayed according to the direction of the flick input as in step 609 of FIG. 6.

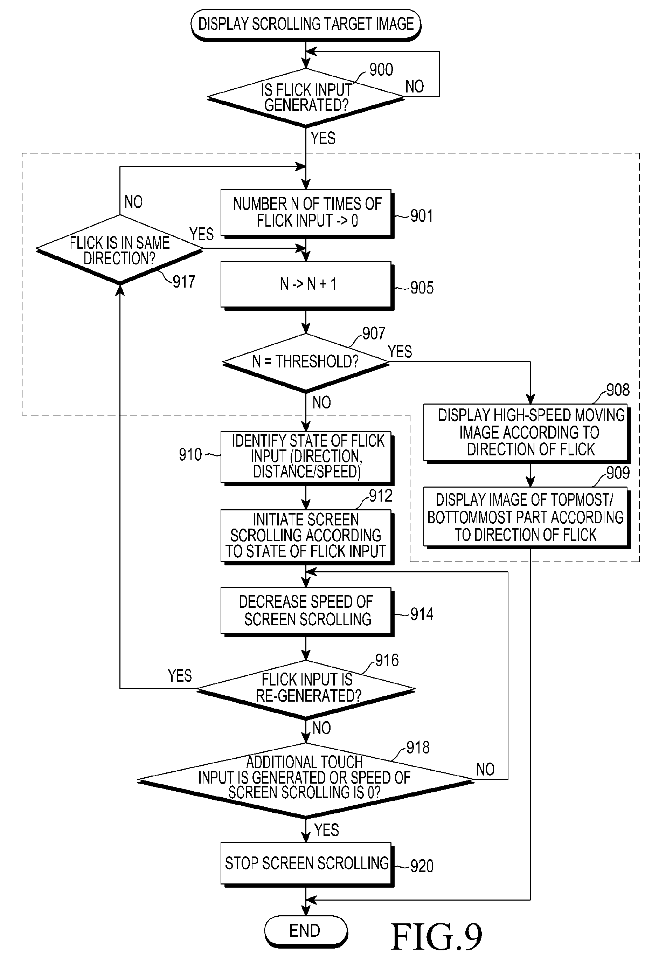

FIG. 9 is a flowchart illustrating a screen scrolling operation of a display device according to a third exemplary embodiment of the present invention. The operation illustrated in FIG. 9 represents, for example, an additional touch input functionally associated with performance of an operation according to a corresponding flick input when the flick input is generated. In this case, the functionally associated additional touch input may be additional flick inputs generated the number of times equal to or larger than a predetermined threshold (for example, three times) before completion of a scrolling operation according to an initial flick input. Referring to FIG. 9, first, it is identified whether the flick input is generated in step 900, and when it is identified that the flick input is generated, the process proceeds to step 901.

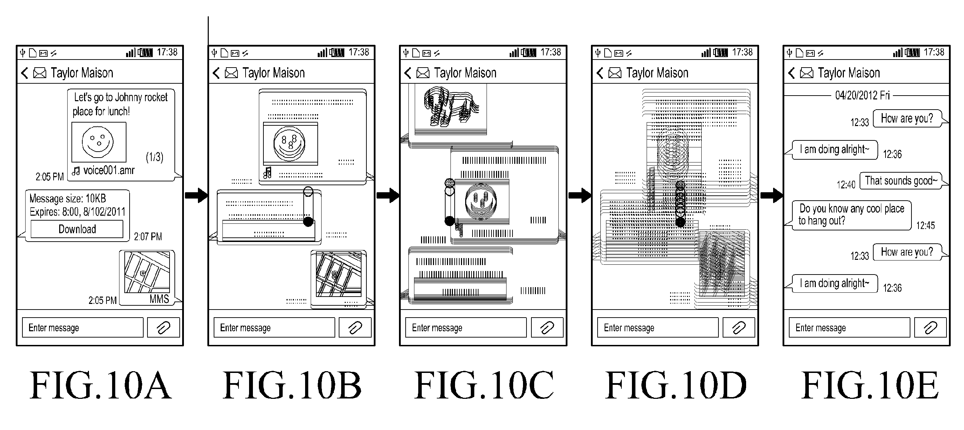

In step 900, the entire list items of the target list view on which the screen scrolling operation is performed may have, for example, a structure as illustrated in FIGS. 10A to 10E. FIGS. 10A to 10E illustrate text conversation service operation performance images according to an exemplary embodiment of the present invention. A part among the entire list of items illustrated in FIGS. 10A to 10E is displayed in one screen according to a size of the screen, and at a beginning state, for example, an image for items of a bottommost part (that is, the most recent message), such as illustrated in FIG. 10A, may be displayed. FIG. 10E is an example of an image for items at the topmost part (that is, the oldest message) among the entire list items.

In step 901, initialization is performed by setting the number N of times of flick inputs to 0. Then, in step 905, the number N of times of current flick inputs is increased by 1 for each flick input in the same direction. Then, in step 907, it is determined whether the number N of flick inputs in the same direction has reached a predetermined threshold (for example, 3). When the number N of times of flick inputs does not reach the predetermined threshold as a result of determination, the process proceeds to step 910, and when the number N of times of flick inputs reaches the predetermined threshold, the process proceeds to step 908.

In step 910 and subsequent steps thereof, a general flick input processing operation is performed. That is, in step 910, a state (direction, distance/speed, and the like) of the flick input generated in step 900 is identified, and in step 912, screen scrolling is initiated according to the state of the flick input. Then, in step 914, a current speed of the screen scrolling is decreased by a predetermined amount, and then, in step 916, it is determined whether a flick re-input is generated. When the flick re-input is not generated, the process proceeds to step 918, and when the flick re-input is generated, the process proceeds to step 917.

In step 918, it is determined whether an additional touch input is generated or the speed of the screen scrolling is 0. When it is determined that the additional touch input is generated or the speed of the screen scrolling is 0 as a result of determination, the process proceeds to step 920 to stop the screen scrolling operation, and when it is determined whether an additional touch input is not generated or the speed of the screen scrolling is not 0, the process returns to step 914 to repeat the steps.

In step 917, it is determined whether a direction of the currently re-input flick is the same as a direction of a previously input flick by identifying the direction of the currently re-input flick. When the direction of the currently re-input flick is not the same as the direction of the previously input flick, the process proceeds to step 901 to initialize the number N of times of flick inputs and repeat the operations, but when the direction of the currently re-input flick is the same as the direction of the previously input flick, the process proceeds to step 905 to increase the number N of times of flick inputs by 1.

When the number N of times of flick inputs reaches the predetermined threshold (for example 3) in step 907, a high-speed moving image is displayed according to the direction of the flick input as illustrated in FIG. 10D in step 908, and then in step 909, as illustrated in FIG. 10E, an image for items at the topmost part or the bottommost part among the entire list items is displayed according to the direction of the flick input.

A sequential operation of the steps illustrated in FIG. 9 will be described. When the flick re-input in the same direction is generated before the screen scrolling operation according to the initially input flick is completed, as illustrated in FIGS. 10B and 10C, the number of times of flick generation is increased while performing the general screen scrolling operation according to the flick input. When the number of times of flick generation reaches a threshold value (for example, 3), as illustrated in FIG. 10D, the high-speed moving image is displayed and then as illustrated in FIG. 10E, the topmost part or the bottommost part among the entire list items is displayed according to the direction of the flick input.

As described above, the screen scrolling method of the display device according to an exemplary embodiment of the present invention does not require many operations in controlling the list view on the display, provides convenience in use, and especially, allows the list view to move to the topmost part or the bottommost part with the minimum operation.

As described above, the present invention may be implemented according to various exemplary embodiments, and in addition, various exemplary embodiments may be implemented through various modifications and changes.

For example, in the exemplary embodiment illustrated in FIG. 2, it is described that when the flick input is generated, it is determined whether the additional flick input is generated within the predetermined reference time, and when the additional flick input is not generated, the screen scrolling operation is performed according to the state of the flick input. However, in addition, similar to the exemplary embodiment illustrated in FIG. 9, when the flick input is generated, the operation of identifying whether the additional input of the flick is generated within the predetermined reference time while immediately performing the screen scrolling operation may also be implemented.

Further, referring to FIG. 2, it is described that the additional flick input has the same direction as that of the previous flick input. However, even when the additional flick input does not have the same direction, an operation of determining that the additional flick input is the additional input may be implemented. With this modification, for example, a user may use a back-and-forth or up-and-down series of flick inputs.

Further, referring to FIG. 2, it is described that the additional touch input after the flick input is the flick input, but the additional touch input may be a touch input simply fixed at a position, not the flick input. That is, in this case, the user may operate the image moving to the topmost end or the bottommost end of the list items through a general touch operation immediately after the flick input (within the predetermined reference time). Further, it is described that the exemplary embodiments are implemented as the respective separated operations, but may be implemented with an operation in which at least a part of the exemplary embodiments is incorporated as a matter of course.

Further, the touch operation using the finger is described as an example in the exemplary embodiments, but it is a matter of course that the present invention may be applied to a touch operation through an electronic pen or stylus, in addition to a finger touch.

Further, the exemplary embodiments are described based on the example in which the screen scrolling operation of an exemplary embodiment of the present invention is generated in a vertical direction of the screen, and the flick input is also generated in the vertical direction of the screen. However, in addition, it is a matter of course that an exemplary embodiment of the present invention may be applied to a method in which screen scrolling is generated in a horizontal direction of the screen and the flick is input in the horizontal direction without any difficulty.

Further, it can be noted that the exemplary embodiments of the present invention may be implemented with hardware, software, or a combination of hardware and software. A volatile or nonvolatile nontransitory storage device, such as ROM, a memory, such as Read-Only Memory (RAM), a memory chip, a device, or an integrated circuit, or a storage medium, such as a Compact-Disc (CD), a Digital Versatile Disc (DVD), a magnetic disk, or a magnetic tape, which may optically or magnetically record data and is simultaneously readable by a machine (e.g. a computer), may be encoded with instructions to execute a method according to an exemplary embodiment of the present invention on a digital computer. An example of the computer readable recording medium includes ROM, RAM, CD-ROM, a magnetic tape, a floppy disk, an optical data storing device. Further, the nontransitory computer readable recording medium may be distributed to computer systems connected through a network, so that a computer readable code may be stored and extracted by a distribution method. Further, it may be recognized that a memory includable in a 3D TV is one example of a machine readable storage medium appropriate for encoding with a program or programs including commands for implementing the exemplary embodiments of the present invention. Accordingly, exemplary embodiments of the present invention include any nontransitory storage medium encoded with a program including codes for implementing the apparatus or the method defined in the claims and a machine (for example, a digital computer and the like) readable storage medium for storing the program.

While the invention has been shown and described with reference to certain exemplary embodiments thereof, it will be understood by those skilled in the art that various changes in form and details may be made therein without departing from the spirit and scope of the invention as defined by the appended claims and their equivalents.

## Claims

1. A method of scrolling a screen of a display device, the method comprising:
when a flick input is generated in a display state of a list view, determining whether a predetermined additional touch input, which is temporally and spatially associated with the flick input or is functionally associated with a performance of an operation according to the flick input, is generated according to a predetermined reference; and
when the additional touch input is generated according to the predetermined reference, displaying a topmost or bottommost part of list items of the list view according to a state of the flick input.

2. The method of claim 1, wherein the temporally associated additional touch input comprises the predetermined touch input generated at least one time within a predetermined reference time when the flick input is generated.

3. The method of claim 2, wherein the additional touch input comprises another flick input.

4. The method of claim 1, wherein the spatially associated additional touch input comprises the flick input generated in a multi-touch scheme when the flick input is generated.

5. The method of claim 4, wherein the generation of the flick input in the multi-touch scheme when the flick input is generated comprises simultaneous generation of a plurality of flick inputs at a plurality of points.

6. The method of claim 4, wherein the generation of the flick input in the multi-touch scheme when the flick input is generated comprises generation of at least one flick input at each of a plurality of points and at least one touch input fixed at a position.

7. The method of claim 1, wherein the additional touch input, which is functionally associated with the performance of the operation according to the flick input, comprises a touch input additionally input before a completion of a scrolling operation according to the flick input.

8. The method of claim 7, wherein the additionally input touch input comprises another flick input.

9. The method of any one of claims 1 to 8, wherein when the additional touch input is generated according to the predetermined reference, an image, to which an effect of higher-speed moving than an image moving speed during a general screen scrolling operation is added, is displayed according to the state of the flick input, and
the topmost or bottommost part of the list items of the list view are displayed according to the state of the flick input.

10. A machine readable non-transitory storage medium encoded with a program for executing the method of scrolling the screen according to any one of claims 1 to 8.

11. A portable terminal comprising the machine readable non-transitory storage medium of claim 10.

12. A portable terminal comprising:
an operation unit;
a display unit; and
at least one controller configured to determine, when a flick input is generated in a display state of a list view, whether a predetermined additional touch input, which is temporally and spatially associated with the flick input or is functionally associated with a performance of an operation according to the corresponding flick input, is generated according to a predetermined reference, and to display, when the additional touch input is generated according to the predetermined reference, a topmost or bottommost part of list items of the list view according to a state of the flick input.

13. The portable terminal of claim 12, wherein the temporally associated additional touch input comprises the predetermined touch input generated at least one time within a predetermined reference time when the flick input is generated.

14. The portable terminal of claim 12, wherein the spatially associated additional touch input comprises the flick input generated in a multi-touch scheme when the flick input is generated, and
wherein the at least one controller is further configured to simultaneous generate, when generating the flick input in the multi-touch scheme when the flick input is generated, a plurality of flick inputs at a plurality of points.

15. The portable terminal of claim 12, wherein the additional touch input, which is functionally associated with the performance of the operation according to the flick input, comprises a touch input additionally input before a completion of a scrolling operation according to the flick input.
